(19) **Europäisches Patentamt / European Patent Office / Office européen des brevets**

(11) **EP 3 910 315 B1**

(12) **EUROPEAN PATENT SPECIFICATION**

(45) Date of publication and mention
of the grant of the patent:
**16.04.2025  Bulletin 2025/16**

(21) Application number: **19908097.9**

(22) Date of filing: **09.01.2019**

(51) International Patent Classification (IPC):
**G01N 15/02** $^{(2024.01)}$        **G01N 15/14** $^{(2024.01)}$

(52) Cooperative Patent Classification (CPC):
**G01N 15/0227; G01N 15/1433; G01N 15/1434;**
G01N 2015/1445; G01N 2015/1452;
G01N 2015/1493

(86) International application number:
**PCT/JP2019/000281**

(87) International publication number:
**WO 2020/144754 (16.07.2020 Gazette 2020/29)**

(54) **SIZE DISTRIBUTION MEASUREMENT DEVICE AND SIZE DISTRIBUTION MEASUREMENT METHOD**

VORRICHTUNG ZUR MESSUNG DER GRÖSSENVERTEILUNG UND VERFAHREN ZUR MESSUNG DER GRÖSSENVERTEILUNG

DISPOSITIF DE MESURE DE DISTRIBUTION DE TAILLE ET PROCÉDÉ DE MESURE DE DISTRIBUTION DE TAILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.11.2021  Bulletin 2021/46**

(73) Proprietor: **Hitachi High-Tech Science Corporation Minato-ku Tokyo 105-6411 (JP)**

(72) Inventors:
• **ANZAI Yumiko**
  **Tokyo 100-8280 (JP)**
• **OSAWA Kentaro**
  **Tokyo 100-8280 (JP)**
• **MINEMURA Hiroyuki**
  **Tokyo 100-8280 (JP)**
• **NISHIHARA Hiroyuki**
  **Tokyo 100-8280 (JP)**
• **SUGAYA Masakazu**
  **Tokyo 100-8280 (JP)**

(74) Representative: **Strehl & Partner mbB Maximilianstrasse 54 80538 München (DE)**

(56) References cited:
WO-A1-2009/014060    WO-A1-2017/060105
JP-A- 2004 069 431    JP-A- 2004 257 909
JP-A- 2004 283 828    JP-A- 2005 504 317
JP-A- 2009 008 602    JP-A- 2012 181 124
JP-A- 2014 153 063    JP-A- 2017 102 032
JP-A- 2018 087 770    JP-A- 2018 179 971
JP-A- H1 194 730      US-A- 5 141 868
US-A1- 2017 160 185

**Description**

Technical Field

The present invention relates to a technology for measuring a size distribution of a particle contained in a liquid sample.

Background Art

In recent years, a development target of a drug moves from a low molecule drug to a bio drug. Since the bio drug is a polymer, the bio drugs are easy to be aggregated, and when the bio drugs are aggregated, toxicity may be generated. For example, the U.S. Food and Drug Administration and the like try to strengthen concentration control regulations of an aggregate. Therefore, there is a need for a technology for quantitatively measuring a size distribution of a desired density with respect to an aggregate in a submicron region of 0.1 to 1 um.

JP-A-2015-083922 (PTL 1) describes a technology for detecting a particle by using an optical measurement. An object of JP-A-2015-083922 (PTL 1) is that "in a single particle detection technology by a scanning molecule counting method which individually detects a single particle by using optical measurement with a confocal microscope or a multiphoton microscope, the single particle can be detected for each type in a sample solution containing a plurality of types of single particles that do not emit light in a specific wavelength band", and JP-A-2015-083922 (PTL 1) describes a technology that "a technology for detecting a single particle in a sample solution according to the present invention detects light in a specific wavelength band from a light detection region to generate time-series light intensity data while moving a position of a photodetection region of a microscope in a sample solution containing a plurality of types of single particles that do not emit light in different wavelength bands, and individually detects a decrease in light intensity generated when the single particle that does not emit light in the specific wavelength band enters the light detection region in the time-series light intensity data as a signal indicating the existence of each of the single particles" (refer to abstract).

An object of JP-A-2017-102032 (PTL 2) is to "provide a technology capable of reducing a measurement error when measuring a specimen by using light.", and JP-A-2017-102032 (PTL 2) describes a technology that "an optical measurement method according to the present invention acquires correspondence relationship data that describes a correspondence relationship between an intensity of reflected light when the specimen is irradiated with light and a size of the specimen, and acquires the size of the specimen by using the correspondence relationship data and the intensity of the reflected light. The optical measurement method according to the present invention corrects an inclination of a container by subtracting a component caused by the inclination of the container of the specimen from a detection signal indicating the intensity of the reflected light when the specimen is irradiated with the light." (refer to abstract).

Citation List

Patent Literature

PTL 1: JP-A-2015-083922

PTL 2: JP-A-2017-102032

US 2017/160185 A1 discloses an optical measurement apparatus with the features in the pre-characteritzing portion of Claim 1. A further related particle measuring device is disclosed in JP 2018 179971 A.

Summary of Invention

Technical Problem

In order to obtain a size distribution of an aggregate, it is required to measure a size of a particle. In order to measure the size of the particle by optical measurement, it is considered that it is required not only to specify a plane position of the particle, but also to obtain an optical signal along a depth direction of the particle. The reason is that the particles exist at various depth positions.

In JP-A-2015-083922 (PTL 1), a position of a photodetection region is caused to move faster than Brownian motion of the particle, thereby following Brownian motion of the particle (paragraph 0016 of the same patent literature). However, in the same patent literature, since measurement light is not scanned in the depth direction of the particle (a direction along an optical axis), it is considered that the measurement of the particle size is difficult to be performed even though presence of the particle is detected.

In JP-A-2017-102032 (PTL 2), the particle size is calculated by referring to correspondence relationship data using reflected light intensity. However, in the same patent literature, it is assumed that reflected light from a stationary particle is used, such that it is considered that calculating the size of the particle performing Brownian motion in the depth direction is not assumed.

The present invention has been made in consideration of the above-described circumstances, and an object thereof is to provide an optical measurement technology capable of quantitatively measuring a size distribution of a particle that performs Brownian motion in a sample.

Solution to Problem

The size distribution measurement device and the size distribution measurement method according to the present invention are defined in the respective independent claims. Further advantageous features are set out in the dependent claims.

Advantageous Effects of Invention

According to a size distribution measurement device according to the present invention, it is possible to quantitatively measure a size distribution of a particle that performs Brownian motion in a three-dimensional manner.

Brief Description of Drawings

[Fig. 1] Fig. 1 is a schematic diagram illustrating a relationship between a focal point position of measurement light and a reflected light intensity (a detection signal).

[Fig. 2] Fig. 2 is a schematic diagram illustrating Brownian motion of a particle and a scanning speed of the measurement light.

[Fig. 3] Fig. 3 illustrates an example of a reflected signal waveform from the particle obtained by simulation.

[Fig. 4] Fig. 4 illustrates a simulation result of a relationship between a frame rate and a detection success rate when $\Delta d$ = 0.1 $\mu$m, $\Delta z$ = 12.87 $\mu$m, a = 0.05 $\mu$m, 0.1 $\mu$m, and 0.2 $\mu$m.

[Fig. 5] Fig. 5 illustrates a result of plotting a minimum frame rate at which the detection success rate is 0.9 or more under conditions of $\Delta d$ = 0.1 $\mu$m and $\Delta z$ = 12.87 $\mu$m, with respect to a.

[Fig. 6] Fig. 6 illustrates a result of plotting the minimum frame rate at which the detection success rate is 0.9 or more with respect to $\Delta z$.

[Fig. 7] Fig. 7 illustrates a result of plotting the minimum frame rate at which the detection success rate is 0.9 or more with respect to $\Delta d$.

[Fig. 8] Fig. 8 is a configuration diagram of a size distribution measurement device 100 according to a first embodiment, which is not an embodiment of the present invention but an example useful for its understanding.

[Fig. 9] Fig. 9 is a conceptual diagram illustrating an outline of a procedure in which the size distribution measurement device 100 measures a size distribution of a particle contained in a sample 110.

[Fig. 10] Fig. 10 is a flowchart illustrating details of the procedure described with reference to Fig. 9.

[Fig. 11] Fig. 11 is a flowchart illustrating another operation example of the size distribution measurement device 100.

[Fig. 12] Fig. 12 is a diagram illustrating an experimental result in which the size distribution measurement device 100 calculates a size distribution of the sample 110 containing particles having the same size.

[Fig. 13] Fig. 13 is a diagram illustrating an experimental result in which the size distribution measurement device 100 calculates a size distribution of the sample 110 containing particles having different sizes.

[Fig. 14] Fig. 14 is a diagram illustrating a result of similarly calculating the size distribution of the sample 110 containing the particles having different sizes by changing particle concentration in various manners.

[Fig. 15] Fig. 15 is a configuration diagram of the size distribution measurement device 100 according to a second embodiment, which is not an embodiment of the present invention but an example useful for its understanding.

[Fig. 16] Fig. 16 is a diagram illustrating a modification of the size distribution measurement device 100 according to the second embodiment.

[Fig. 17] Fig. 17 is a configuration diagram of the size distribution measurement device 100 according to a third embodiment, which is not an embodiment of the present invention but an example useful for its understanding.

[Fig. 18] Fig. 18 is a diagram illustrating a procedure of switching a measurement method according to a particle diameter in a fourth embodiment as an embodiment of the present invention.

[Fig. 19] Fig. 19 is a configuration diagram of a sample container 1900 suitable for use in a fifth embodiment.

[Fig. 20] Fig. 20 is a diagram illustrating a procedure of forming a reference particle storage hole 1906.

[Fig. 21] Fig. 21 is a configuration diagram of a sample container 2100 suitable for use in a sixth embodiment.

[Fig. 22A] Fig. 22A is a diagram illustrating a configuration of a sample container 2200 suitable for use in a seventh embodiment.

[Fig. 22B] Fig. 22B is a side cross-sectional view illustrating a procedure of introducing the sample 110 into the sample container 2200.

[Fig. 23] Fig. 23 is a side cross-sectional view illustrating a method of using the sample container 2200 according to the seventh embodiment.

[Fig. 24] Fig. 24 illustrates an example of correspondence relationship data describing a correspondence relationship between a reflected light intensity and a particle size.

Description of Embodiments

<Regarding a basic principle of measuring a size of a particle>

In the following, in order to facilitate the understanding of the present invention, a basic principle of measuring a size of a particle will be described first. Next, a specific configuration example of a size distribution measurement device according to embodiments of the present invention and examples useful for its understanding will be described.

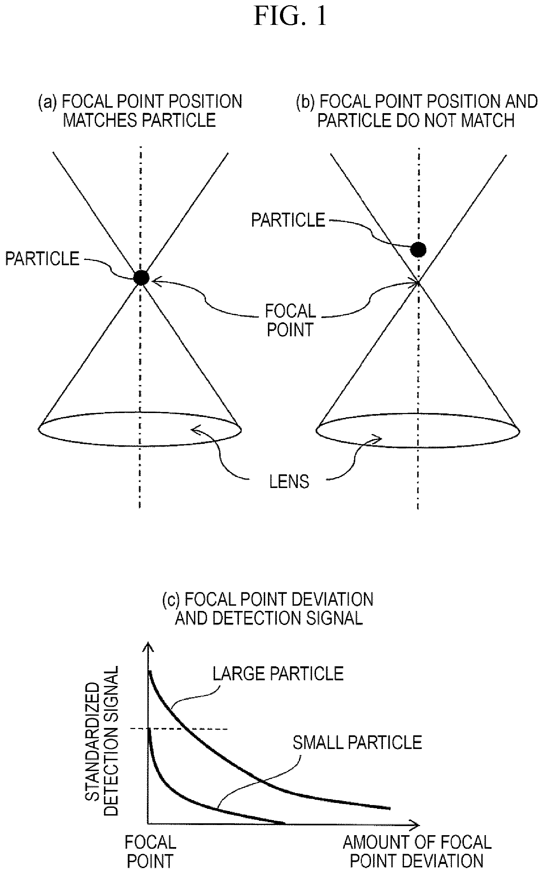

Fig. 1 is a schematic diagram illustrating a relationship between a focal point position of measurement light and a reflected light intensity (a detection signal). When comparing a case where the focal point position of the measurement light matches a position of the particle (Fig. (1a)) and a case where the focal point position thereof and the position thereof do not match each other (Fig. (1b)), the reflected light intensity is different even though irradiation intensity is the same. The reflected light intensity is smaller as the focal point position thereof and the position thereof do not match each other. In other words, the reflected light intensity is maximized when the focal point position and the particle position match each other. As the particle size becomes larger, the reflected light intensity also tends to be larger (Fig. (1c)). By using these correspondence relationships, the particle size can be calculated using the reflected light intensity.

However, depending on the correspondence relationship between the particle size and the focal point position, the reflected light intensities from particles having different sizes may be the same (refer to a dotted line portion in Fig. (1c)). Therefore, in order to accurately calculate the particle size, it is important to use the reflected light intensity from the focal point position of the measurement light.

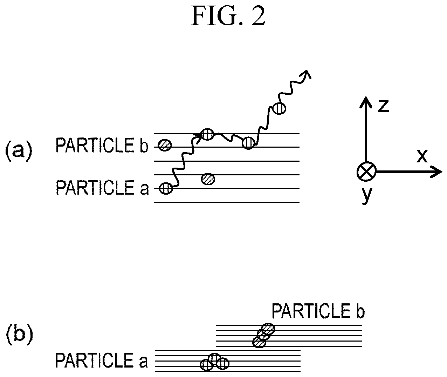

Fig. 2 is a schematic diagram illustrating Brownian motion of the particle and a scanning speed of the measurement light. When the scanning speed of the measurement light is slower than a Brownian motion speed of the particle, the measurement light cannot follow movement of the particle, such that it is difficult to distinguish the particles (Fig. (2a)). On the other hand, when the scanning speed of the measurement light is fast enough to follow the Brownian motion speed thereof, the measurement light can track the movement of each particle, such that individual particles can be distinguished (Fig. (2b)). Specific setting values will be described later.

A design parameter of an optical system of the size distribution measurement device will be described. In order to measure a particle diameter based upon the reflected light intensity, it is desirable that a spot size of the measurement light is slightly larger than an upper limit size of the particle to be measured. Therefore, on the assumption that a wavelength of the measurement light is defined as $\lambda$ and a numerical aperture of an objective lens is defined as NA, an optical spot diameter $R_{particle}$ can be represented by the following formula 1.

[Formula 1]

$$\frac{\lambda}{NA} > R_{particle} \qquad (1)$$

In order to detect the reflected light in a state where the focal point is almost positioned on the particle, a z pitch ($\Delta d$) is required to be smaller than a resolution $\Delta z$ in a z direction. That is, the following formula 2 is required to be satisfied. $\Delta z$ can be defined as a distance at which a reflected signal intensity decreases from a maximum value to a certain threshold value (for example, half of the maximum value) when the focal point position is scanned in the z direction.

[Formula 2]

$$\Delta d < \Delta z \qquad (2)$$

An image acquisition speed can be defined as the number of image acquisitions per second. The number thereof is referred to as a frame rate below. Since the particle in the liquid to be measured performs Brownian motion, in order to obtain a correct particle diameter distribution, it is required to acquire an image at a frame rate that can follow Brownian motion. In the following, the required frame rate will be described by using a formula. Here, for simplifying the description, only Brownian motion in the z direction is considered. An average movement amount L of the particle performing Brownian motion during a time t is represented by the following formula 3.
[Formula 3]

$$L = \sqrt{2Dt} \quad (3)$$

D in formula 3 is a diffusion constant of the particle, and is represented by the following formula 4 using a Boltzmann constant k, an absolute temperature T, a viscosity $\mu$ of a fluid, and a particle diameter a.
[Formula 4]

$$D = \frac{kT}{6\pi\mu a} \quad (4)$$

In consideration of the required frame rate, it is desirable to interpret that a measurement z position does not move by $\Delta d$ at regular time intervals, a z position of the particle moves by $\Delta d$ independently of a component based upon Brownian motion, and the measurement z position is fixed at an origin point. Hereinafter, the embodiment will be interpreted and described as such. Under this interpretation, an average movement amount $L_m$ of the particle disposed at the origin point at time 0 up to m-th measurement (time $t_m$) is represented by the following formula 5. $\Delta t$ is a reciprocal number of the frame rate ($\Delta t = 1 / FR$), and $t_m = m\Delta t$.
[Formula 5]

$$L_m = \sqrt{2Dt_m} + \frac{\Delta d}{\Delta t}t_m \quad (5)$$

On the assumption that z resolution is defined as $\Delta z$, it is considered that average time $T_{ave}$ at which the particle stays within a z resolution range approximately satisfies the following formula 6.
[Formula 6]

$$\sqrt{2DT_{ave}} + \frac{\Delta d}{\Delta t}T_{ave} = \Delta z \quad (6)$$

The following formula 7 is obtained by solving formula 6 with respect to $T_{ave}$. For simplification of the formula, $\alpha = \Delta z / \Delta d$ is set.
[Formula 7]

$$T_{ave} = \Delta t \left\{ \alpha + \left(\frac{\Delta t\, D}{\Delta d^2}\right) - \sqrt{\left(\frac{\Delta t\, D}{\Delta d^2}\right)^2 + 2\alpha\left(\frac{\Delta t\, D}{\Delta d^2}\right)} \right\} \quad (7)$$

In order to detect the reflected light from the particle in a state where the focal point is almost positioned on the particle, an image is required to be acquired a plurality of times while the particle stays within the z resolution range. Such a condition can be represented by the following formula 8. n is a natural number of 1 or more, and is the average number of times the particle stays within the z resolution range.
[Formula 8]

$$T_{ave} > n\Delta t \qquad (8)$$

It can be said that formula 8 has a condition that the reflected light from the particle can be continuously detected n times or more on average. Formula 9 can be obtained by substituting formula 7 into formula 8 and rearranging it.
[Formula 9]

$$\Delta t < \frac{(\alpha - n)^2}{2n} \frac{\Delta d^2}{D} \qquad (9)$$

The following formula 10 is obtained by rewriting formula 9 using a relationship of FR = 1 / Δt.
[Formula 10]

$$FR > \frac{2n}{(\alpha - n)^2} \frac{D}{\Delta d^2} \qquad (10)$$

Since the average number of stays n is considered to be approximately proportional to Δz / Δd, n is represented by the following formula 11 using a proportionality coefficient β of 1 or less.
[Formula 11]

$$n = \beta \frac{\Delta z}{\Delta d} \qquad (11)$$

The following formula 12 is obtained by further rearranging formula 10 using the formula 11. Here, $\gamma = 2\beta / (1 - \beta)^2$.
[Formula 12]

$$FR \geqq \gamma \frac{D}{\Delta z \Delta d} \qquad (12)$$

Formula 12 is a condition that the frame rate is required to be satisfied in order to correctly measure the particle diameter distribution which is predicted based upon theoretical consideration. A fact that a right side is proportional to a diffusion constant D indicates that as the movement of the particle becomes faster, a high frame rate is required to follow the movement thereof. A fact that the right side is inversely proportional to the z resolution Δz indicates that as the z resolution becomes higher, an amount of deviation from the focal point position of the particle that can be tolerated in detecting the reflected light becomes smaller, such that a higher frame rate is required. A fact that the right side is inversely proportional to the z pitch Δd indicates that as the z pitch becomes finer, a measurement speed in the z direction decreases, such that a higher frame is required. Since it is difficult to predict a value of γ only by theoretical consideration, it is desirable to determine the value thereof based upon simulation or experiment.

According to formula 12, as Δz and Δd become larger, the required frame rate becomes lower. On the other hand, when Δz becomes too large, a probability that a plurality of particles exist within the z resolution range becomes high, and as a result, it becomes difficult to measure a sample having high particle concentration. The z resolution should be determined in consideration of a particle concentration range of a target particle. As described above, there is a restriction that Δd should be smaller than Δz. Even in a range where Δd is smaller than Δz, when Δd becomes too large, a probability that the focal point is almost positioned on the particle decreases, and as a result, the measurement accuracy of the particle diameter deteriorates. Δd should be determined in consideration of the particle diameter measurement accuracy.

In order to verify the validity of the condition of formula 12, the inventors further conduct a simulation study. In the simulation, it is assumed that there is one particle performing Brownian motion in a measurement region, a reflected signal waveform from a particle obtained when the measurement region is measured at the frame rate FR, z resolution Δz, and z pitch Δd is repeatedly calculated 10,000 times, and the obtained waveform is processed with a predetermined algorithm, thereby evaluating a particle detection success rate (number of times one particle is detected ÷ 10,000). The simulation is

6

performed under conditions that simulation is T = 300 [K], $\mu$ = 0.001 [Pa*s], and a size in the z direction of the measurement region is 1 mm.

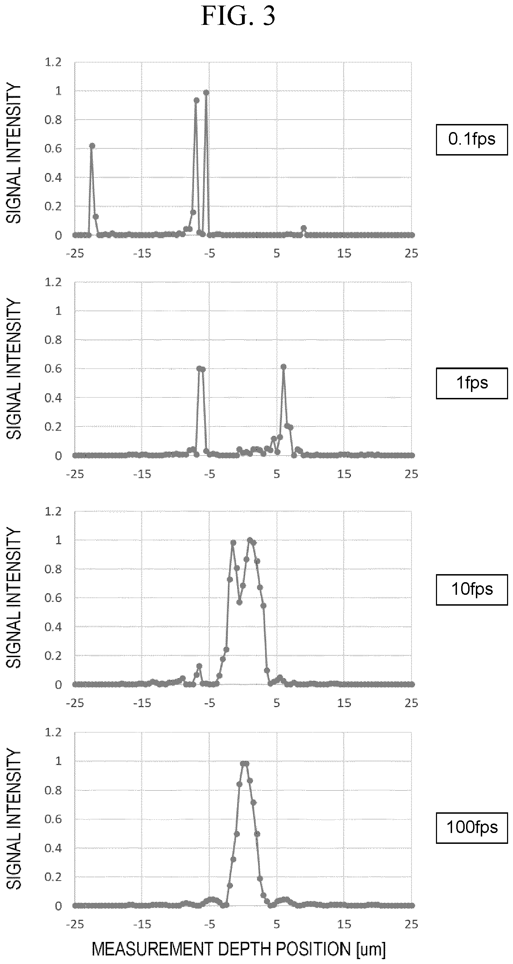

Fig. 3 illustrates an example of a reflected signal waveform from a particle obtained by the simulation ($\Delta$d = 0.5 $\mu$m, $\Delta$z = about 4.7 $\mu$m). A signal intensity is standardized by a value when the positions of the particle and the focal point match each other. When the frame rate is from 0.1 fps to 10 fps, a plurality of maximum peaks are observed even though only one particle exists. The reason is that when the frame rate is low, the scanning speed in the z direction is equal to or less than the Brownian motion speed of the particle, such that the reflected light from the same particle is detected at a plurality of z positions. In the case of obtaining such a waveform, when data is analyzed by interpreting that each maximum peak is a signal corresponding to a different particle, the same particle is counted a plurality of times and the number of particles is overestimated.

As a method for avoiding counting the same particle a plurality of times, for example, proposed is an effective analysis method in which the particle is determined only when a reflected signal intensity equal to or greater than a threshold value is obtained at the z position that is continuous for a certain number of times (a first time) or more, and after that, when a reflected signal intensity equal to or lower than the threshold value is obtained at the z position that is continuous for a certain number of times (a second time) or more, it is determined that the measurement of the particle is completed. Here, the first time and the second time may be the same as each other or different from each other. For example, when the threshold value is defined as 0.1 and the first time and the second time are defined as 5, the number of detected particles is 1 at 0.1 fps, 0 at 1 fps, 1 at 10 fps, and 1 at 100 fps. From this example, it can be seen that when the frame rate is insufficient, a correct measurement result cannot be obtained.

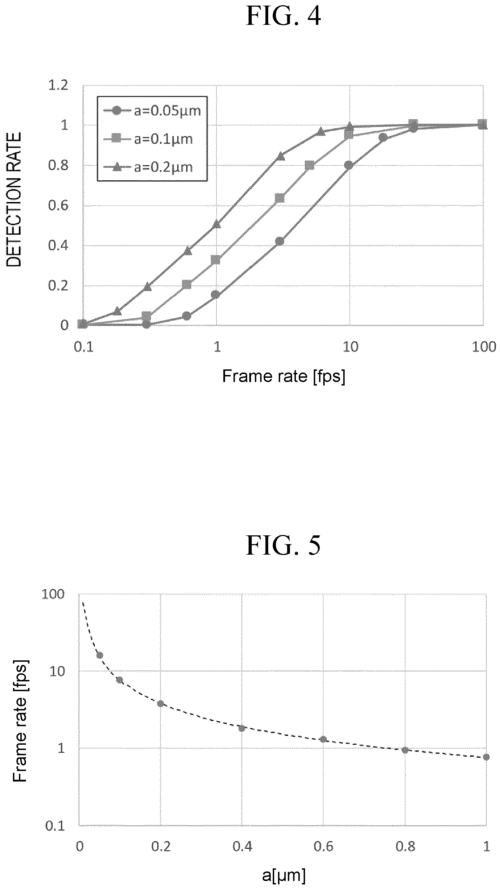

Fig. 4 illustrates a simulation result of a relationship between the frame rate and the detection success rate when $\Delta$d = 0.1 $\mu$m, $\Delta$z = 12.87 $\mu$m, a = 0.05 $\mu$m, 0.1 $\mu$m, and 0.2 $\mu$m. It can be seen that the detection rate approaches 1 as the frame rate increases. The frame rate at which the detection rate becomes approximately 1 is different depending on the particle diameter a. The reason is that as can be seen from formula 4, as the particle diameter becomes smaller, the diffusion constant D becomes larger such that the speed of Brownian motion increases.

Fig. 5 illustrates a result of plotting a minimum frame rate at which the detection success rate becomes 0.9 or more with respect to under conditions of $\Delta$d = 0.1 $\mu$m and $\Delta$z = 12.87 $\mu$m. A broken line is obtained by fitting a simulation result using the following formula 13.

[Formula 13]

$$FR = \gamma \frac{D}{\Delta z \, \Delta d} \qquad (1\,3)$$

A fitting parameter $\gamma$ is about 4.46. The simulation result is accurately fitted by using formula 13, and it can be seen that the required frame rate is almost proportional to D (inversely proportional to a).

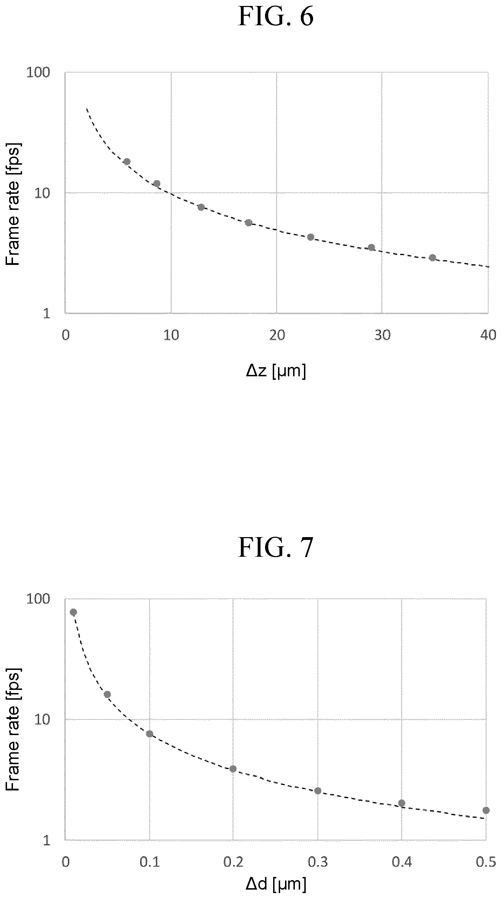

Figs. 6 and 7 respectively illustrate results of plotting the minimum frame rate at which the detection success rate becomes 0.9 or more with respect to $\Delta$z and $\Delta$d. Conditions are a = 0.1 $\mu$m, $\Delta$z = 12.87 $\mu$m, a = 0.1 $\mu$m, and $\Delta$d = 0.1 $\mu$m, respectively. A broken line is a line drawn by using formula 13 with the same $\gamma$ value as shown in Fig. 6. From this result, it can be seen that the required frame rate is inversely proportional to $\Delta$z and $\Delta$d. All the simulation results of Figs. 5, 6, and 7 almost coincide with formula 12, and the validity of formula 12 can be confirmed from the above-described examination results. The value of $\gamma$ in formula 12 changes depending on an analysis algorithm, an experimental (simulation) condition, or the like, and in most cases $\gamma$ > 4 is required for the detection success rate to exceed 0.9.

As described above, a large frame rate is desirable in order to cause the detection rate to be close to 1. On the other hand, when the frame rate becomes larger than necessary, noise increases such that the measurement accuracy of the particle diameter deteriorates. The reason is that a frequency band of a signal increases as the frame rate increases. In consideration of performance of a typical detector, it is desirable to set the frame rate to 100 fps or less. When the frame rate is converted to the value of y, an upper limit of $\gamma$ is about 10,000.

<First embodiment>

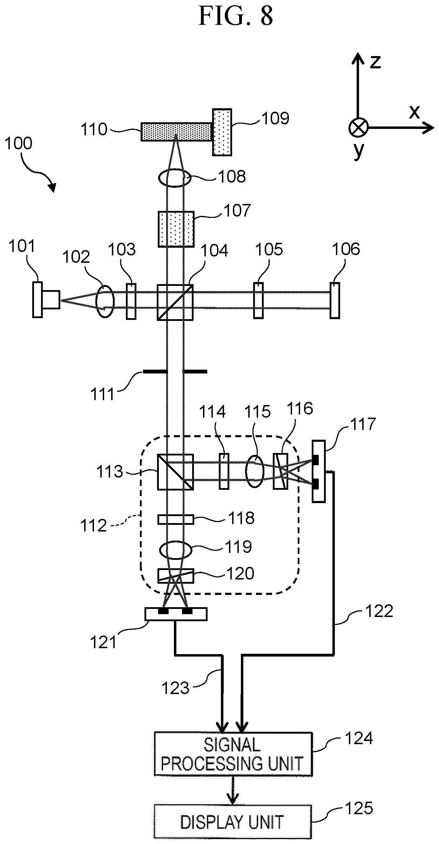

Fig. 8 is a block diagram of a size distribution measurement device 100 according to a first embodiment, which is not an embodiment of the present invention but an example useful for its understanding. Laser light emitted from a light source 101 is converted into parallel light by a collimating lens 102. After polarization is adjusted to 45 degrees linear polarization by a $\lambda$/2 plate 103 of which optical axis is set to about 22.5 degrees with respect to a horizontal direction, the 45 degrees linear polarization is split into measurement light and reference light by a polarization beam splitter 104.

After a polarization state is adjusted by a $\lambda$/2 plate 105, the reference light is reflected by a reference light mirror 106 and incident on the polarization beam splitter 104 again. The measurement light is condensed by an objective lens 108 so that a focal point position of the measurement light matches a measurement position of a sample 110. An XY axis drive mechanism 107 scans the focal point position of the measurement light on an XY plane (a plane perpendicular to a depth direction of the sample 110). A Z axis drive mechanism 109 scans the focal point position of the measurement light along a Z axis direction (an optical axis direction of the measurement light). The reflected light reflected from the sample 110 is incident on the polarization beam splitter 104 again.

The reflected light and the reference light are multiplexed by the polarization beam splitter 104 to form synthesized light. The synthesized light is guided to an interference optical system 112 via a pinhole 111. The synthesized light is split into transmitted light and reflected light by a polarization beam splitter 113.

The reflected light passes through a $\lambda/4$ plate 114 of which optical axis is set to about 45 degrees with respect to the horizontal direction, and then is condensed by a condensing lens 115 and bifurcated by a Wollaston prism 116, thereby generating first interference light and second interference light having phase relationships different from each other by 180 degrees. A current differential type photodetector 117 detects the first interference light and the second interference light, and outputs a signal 122 proportional to a difference in intensities therebetween.

The transmitted light is transmitted through a $\lambda/2$ plate 118 of which optical axis is set to about 22.5 degrees with respect to the horizontal direction, and then is condensed by a condensing lens 119 and bifurcated by a Wollaston prism 120, thereby generating third interference light and fourth interference light having phase relationships different from each other by 180 degrees. A current differential type photodetector 121 detects the third interference light and the fourth interference light, and outputs a signal 123 proportional to a difference in intensities therebetween.

A signal processing unit 124 calculates a size distribution of a particle contained in the sample 110 based upon the signals 122 and 123. A principle of calculating the size distribution thereof is as described above. Details of a calculation procedure will be described later. A display unit 125 displays a calculation result by the signal processing unit 124.

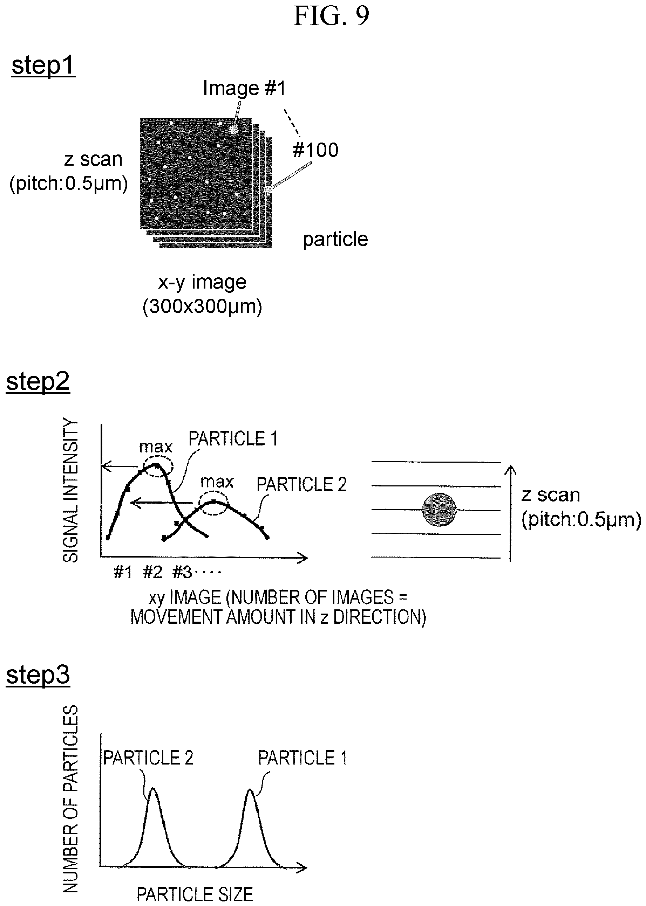

Fig. 9 is a conceptual diagram illustrating an outline of a procedure in which the size distribution measurement device 100 measures the size distribution of the particle contained in the sample 110. Hereinafter, each step of Fig. 9 will be described, and then details of each step will be described with reference to a flowchart described later.

The signal processing unit 124 acquires a plane image (an observation image on the XY plane) of the sample 110 while scanning the focal point position of the measurement light along the Z axis direction (step 1 in Fig. 9). For example, XY images are acquired at 100 different focal point positions along the Z axis direction. Conditions regarding a scanning interval (the z pitch) of the focal point position in the Z axis direction are as described above.

The signal processing unit 124 specifies individual particles contained in the XY images by comparing the XY images adjacent to each other (step 2 in Fig. 9). For example, by setting a partial region in the XY image as a search window and comparing light points contained in the partial region between the XY images adjacent to each other, the light point in the search window can be tracked. For example, as described in Fig. 4, when the reflected light intensity is equal to or greater than a determined threshold value in three sheets of XY images adjacent to each other, it can be determined that the particle exists at that position. It is desirable to set a size of the search window to the extent that the size thereof roughly includes one particle.

The number of the XY image corresponds to the focal point position in the z direction. As described in Fig. 1, since the reflected light intensity is maximized when the focal point position and the particle position match each other, a signal waveform as illustrated in the middle of Fig. 9 can be obtained when plotting a correspondence relationship between the image number and the reflected light intensity. The signal processing unit 124 acquires this signal waveform for each of the specified particles.

The signal processing unit 124 specifies the particle size by referring to correspondence relationship data in which a correspondence relationship between the reflected light intensity and the particle size is defined in advance. Specifically, the size of each particle is acquired by referring to the correspondence relationship data using the maximum reflected light intensity acquired in step 2. The signal processing unit 124 calculates the particle size distribution, and the display unit 125 displays a calculation result thereof. For example, as illustrated in the lower part of Fig. 9, the number of distributions of the particle size can be outputted.

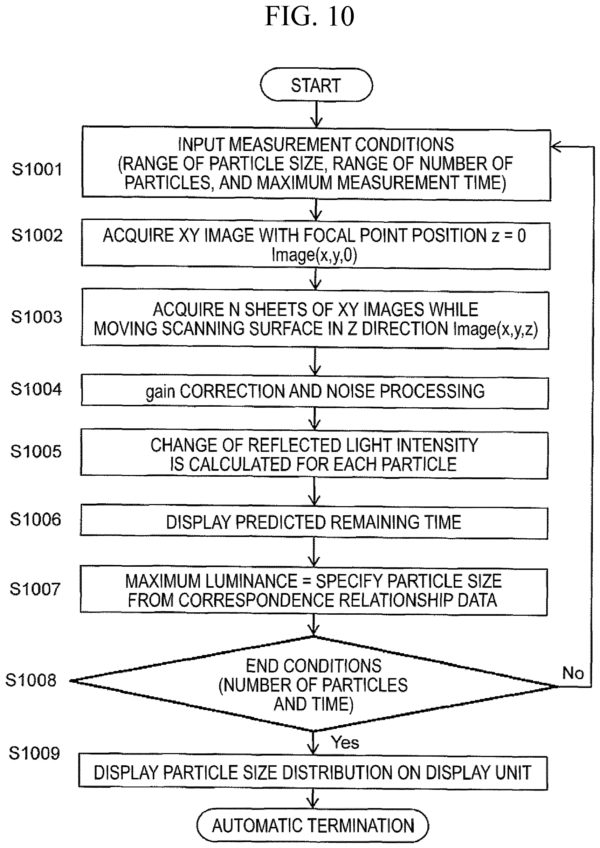

Fig. 10 is a flowchart illustrating the details of the procedure described with reference to Fig. 9. The size distribution measurement device 100 calculates the size distribution of the particle contained in the sample 110 according to the flowchart. Hereinafter, each step of Fig. 10 will be described.

(Fig. 10: Step S1001)

A user inputs a measurement condition to the size distribution measurement device 100. The signal processing unit 124 receives an input of the measurement condition. As the measurement condition, for example, a size range of a particle to be measured, a range of the number of particles contained in the sample 110, a maximum measurement time, or the like can be considered.

(Fig. 10: Steps S1002 to S1004)

The signal processing unit 124 acquires an XY image at each focal point position while scanning the focal point position in the Z axis direction (S1002 to S1003). An initial value of the focal point position is defined as $z = 0$. When tracking individual particles in the XY image, the signal processing unit 124 may appropriately perform image sharpening processing or the like such as gain correction, noise processing, or the like (S1004).

(Fig. 10: Steps S1005 to S1007)

The signal processing unit 124 specifies each particle in the XY image. The signal processing unit 124 calculates a plot (corresponding to the plot in the middle of Fig. 9) representing the correspondence relationship between the focal point position and the reflected light intensity in the Z axis direction for each specified particle (S1005). Since this processing requires a certain amount of time, predicted remaining processing time may be displayed (S1006). The signal processing unit 124 specifies the particle size by referring to the correspondence relationship data using the maximum reflected light intensity (S1007).

(Fig. 10: Steps S1008 to S1009)

When measurement end conditions are reached, the processing proceeds to step S1009, and when the measurement end conditions are not reached, the processing returns to step S1001 and the same processing is repeated (S1008). The measurement end conditions referred to herein are, for example, the range of the number of particles and the maximum measurement time inputted in step S1001. The signal processing unit 124 calculates the size distribution of the particle and displays the calculated size distribution thereof on a screen via the display unit 125 (S1009).

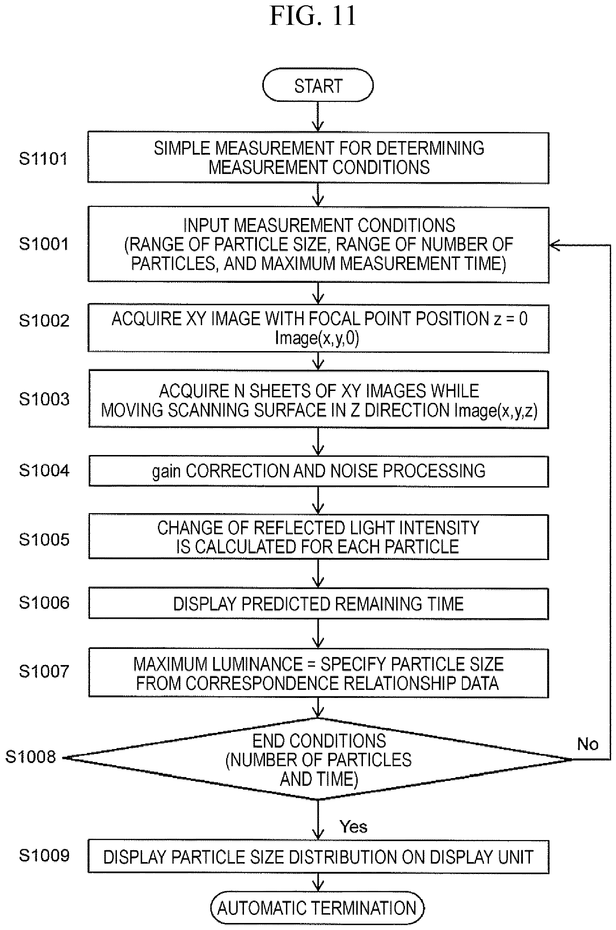

Fig. 11 is a flowchart illustrating another operation example of the size distribution measurement device 100. This flowchart is the same as that of Fig. 10 except that step S1101 is performed before step S1001. In step S1101, the size distribution measurement device 100 performs simple measurement for roughly grasping the number of particles in the sample 110. For example, a small number of XY images are acquired by using a predetermined measurement condition, and the number of particles is calculated by using the XY images. For example, when a clearly abnormal measurement result is obtained, it can be estimated that the actual number of particles is far from the predetermined measurement condition. As a result, an operator can roughly predict an appropriate measurement condition to be set in step S1001. Processing from step S1001 is the same as that of Fig. 10.

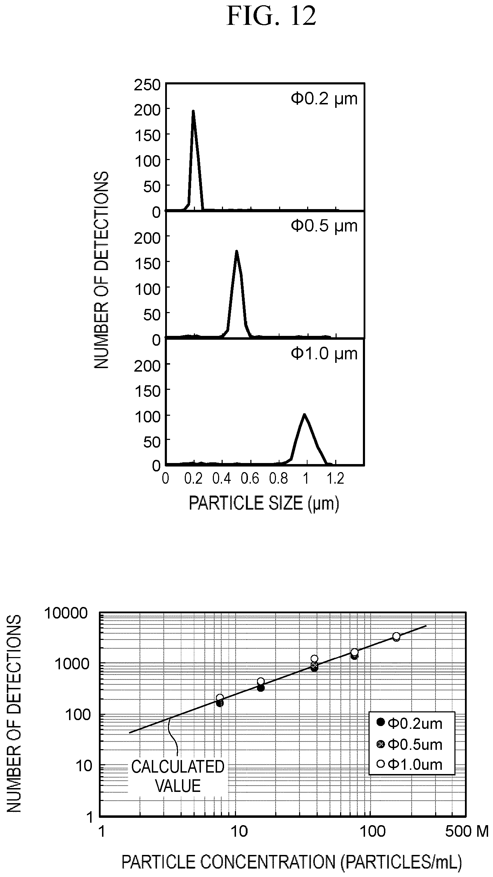

Fig. 12 is a diagram illustrating an experimental result in which the size distribution measurement device 100 calculates the size distribution of the sample 110 containing particles having the same size. An experimental result shown in an upper part of Fig. 12 shows a result of measuring three types of particles respectively having a diameter of 0.2 $\mu$m, 0.5 $\mu$m, and 1.0 $\mu$m by setting particle concentration to $1.5 \times 10^7$ particles/mL. With respect to any one of the particle sizes, only a single particle size is detected. A lower part of Fig. 12 shows a result of calculating the size distribution in the same manner by changing the particle concentration in various ways. With respect to any one of the particle sizes, an experimental result consistent with a calculated value is obtained within a range of the particle concentration of approximately $10^7$ to $10^8$ particles/mL.

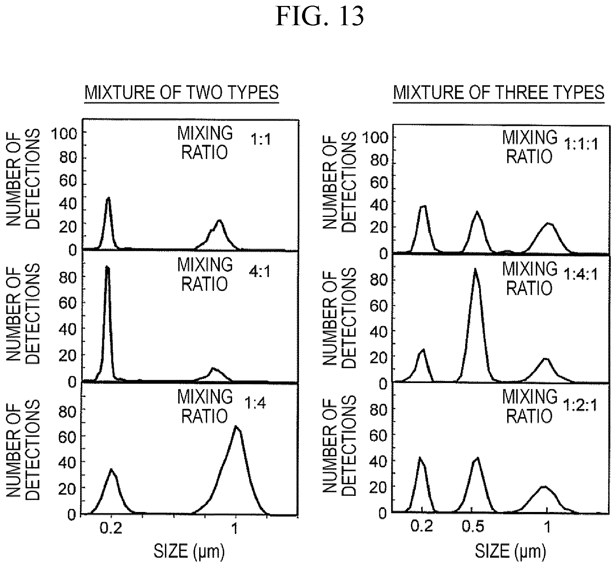

Fig. 13 is a diagram illustrating an experimental result in which the size distribution measurement device 100 calculates the size distribution of the sample 110 containing particles having different sizes. A drawing on the left side of Fig. 13 illustrates an experimental result of the sample 110 in which two kinds of particle sizes are mixed. A drawing on the right side of Fig. 13 illustrates an experimental result of the sample 110 in which three kinds of particle sizes are mixed. A mixing ratio of each particle size is also illustrated in Fig. 13. In any one of the experimental results, it can be seen that each particle size can be accurately distinguished.

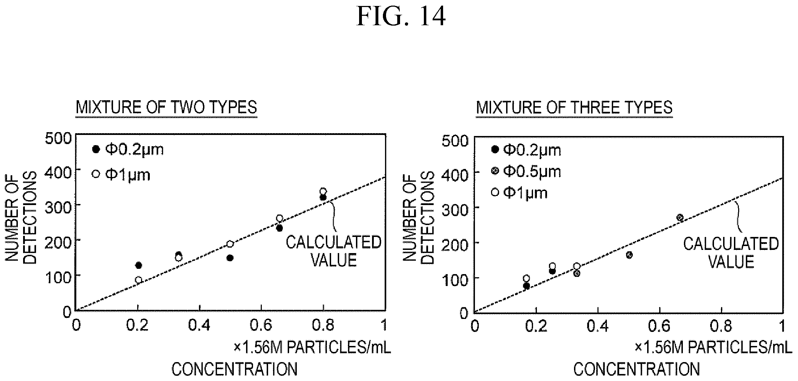

Fig. 14 is a diagram illustrating a result of similarly calculating the size distribution of the sample 110 containing the particles having different sizes by changing the particle concentration in various ways. A drawing on the left side of Fig. 14 illustrates an experimental result of the sample 110 in which two kinds of particle sizes are mixed. A drawing on the right side of Fig. 14 illustrates an experimental result of the sample 110 in which three kinds of particle sizes are mixed. With respect to each particle concentration, a desirable measurement result that roughly matches a calculated value is obtained.

<First embodiment: Summary>

The size distribution measurement device 100 according to the first embodiment acquires the XY image of the sample 110 at each focal point position while scanning the focal point position of the measurement light along the optical axis direction. The size distribution measurement device 100 further specifies each particle on the XY image individually, and obtains the particle size by using the reflected light intensity obtained from the position having the highest reflected light intensity of the respective focal point positions in the Z axis direction. Accordingly, it is possible to accurately obtain the size distribution of the particle that performs Brownian motion along the Z axis direction.

The size distribution measurement device 100 according to the first embodiment scans the measurement light faster than the Brownian motion speed of the particle in the Z axis direction. As a result, the number of particles can be accurately counted by following Brownian motion of the particle in the Z axis direction.

<Second embodiment>

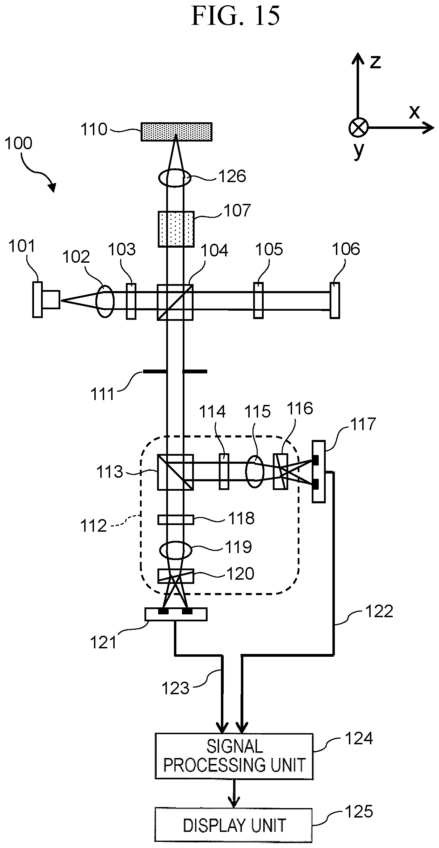

Fig. 15 is a block diagram of the size distribution measurement device 100 according to a second embodiment, which is not an embodiment of the present invention but an example useful for its understanding. The first embodiment describes that the Z axis drive mechanism 109 scans the focal point position of the measurement light in the z direction. In Fig. 15, a variable focus lens 126 is provided instead of the objective lens 108 and the Z axis drive mechanism 109. The variable focus lens 126 can change the focal point position in the Z axis direction. Therefore, in the configuration example illustrated in Fig. 15 as well, the same operation as that of the first embodiment can be performed.

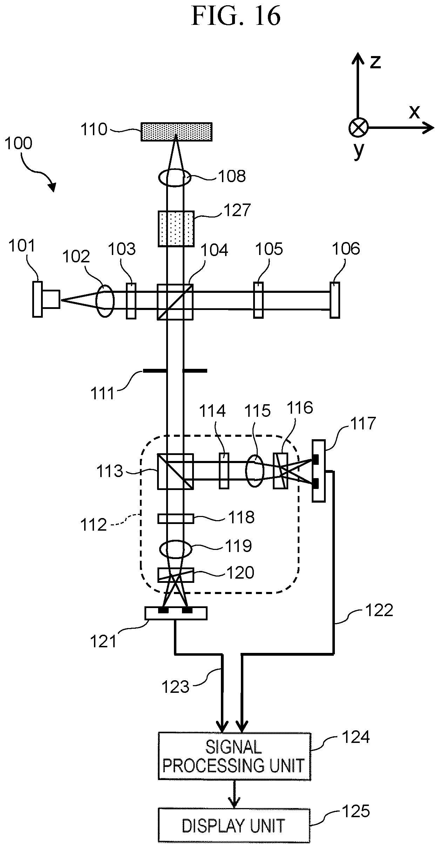

Fig. 16 is a diagram illustrating a modification of the size distribution measurement device 100 according to the second embodiment. In Fig. 16, an XYZ axis drive mechanism 127 is provided instead of the XY axis drive mechanism 107 and the Z axis drive mechanism 109. The XYZ axis drive mechanism 127 can change the focal point position in each XYZ axis direction. Therefore, in the configuration example illustrated in Fig. 16 as well, the same operation as that of the first embodiment can be performed.

<Third embodiment>

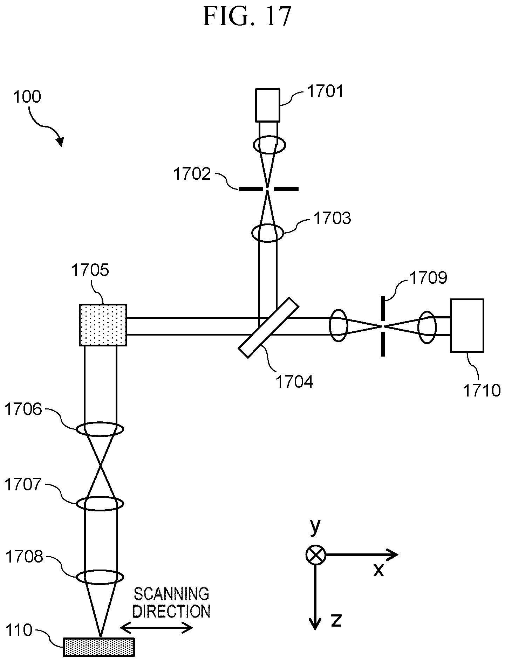

Fig. 17 is a block diagram of the size distribution measurement device 100 according to a third embodiment, which is not an embodiment of the present invention but an example useful for its understanding. The size distribution measurement device 100 according to the third embodiment is configured as a confocal microscope. Light emitted from a laser light source 1701 passes through a pinhole 1702. After that, the light is converted into parallel light by a collimating lens 1703, and reaches an optical path separating element 1704 and a scanning mechanism 1705. The scanning mechanism 1705 scans the focal point position of the measurement light with respect to the sample 110. The measurement light is emitted to the sample 110 via a projection lens 1706, an image-forming lens 1707, and an objective lens 1708. The reflected light reflected from the sample 110 propagates an optical path in an opposite direction, and reaches a pinhole 1709 via the optical path separating element 1704. An optical system is designed so that the focal point of the reflected light is also focused on a measurement surface of a measurement instrument 1710 when the focal point position of the measurement light in the Z axis direction is focused on the measurement position of the sample 110.

The size distribution measurement device 100 according to the third embodiment also changes the focal point position of the measurement light in each XYZ axis direction, such that the same operations as those of the first and second embodiments can be performed. A slit may be used instead of the pinholes 1702 and 1709. An LED (Light Emitting Diode) can be used instead of the laser light source 1701.

<Fourth embodiment as an embodiment of the present invention>

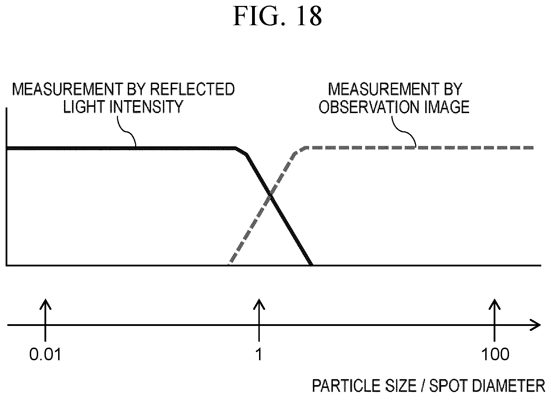

Fig. 18 is a diagram illustrating a procedure of switching a measurement method according to the particle diameter. When the spot size of the measurement light is relatively larger than the particle size, the particle size distribution can be measured by the method using the reflected light intensity described in the first to third embodiments. On the other hand, when the particle size is sufficiently larger than the spot size, the method using the reflected light intensity is not desirable. The reason is that the reflected light intensity does not significantly change as illustrated in the middle of Fig. 9 even though the measurement light is scanned. Therefore, when the particle size is large enough, it can be considered to measure the particle size by using the observation image of the sample 110. The reason is that when the particle size is large enough, the particle can be identified on the observation image.

As a reference for switching the measurement method, for example, a ratio of the particle size to the spot size (particle size / spot diameter) can be used. As a result of measuring the particle size by using the reflected light intensity, when the particle size / the spot diameter is equal to or less than a threshold value (for example, 2 or less), the measurement result is adopted. When the particle size / the spot diameter is equal to or greater than the threshold value, the particle size is measured again by using the observation image. In the same manner, as a result of measuring the particle size by using the observation image, when the particle size / the spot diameter is equal to or greater than the threshold value, the measurement result is adopted, and when the particle size / the spot diameter is equal to or less than the threshold value, the particle size is measured again by using the reflected light intensity. Any one of the measurement methods may be used at a boundary portion between the two measurement methods.

For example, the signal processing unit 124 can acquire the observation image of the sample 110 by the same principle as that of a scanning type optical microscope. The reason is that the size distribution measurement device 100 uses an optical system that scans the measurement light.

In Fig. 18, a threshold value for switching from the measurement by the reflected light intensity to the measurement by the observation image is the same as a threshold value for switching from the measurement by the observation image to the measurement by the reflected light intensity, and these threshold values may be different from each other.

<Fifth embodiment>

The above embodiments describe the method of calculating the particle size distribution by following Brownian motion of the particle. On the other hand, from a viewpoint of measurement accuracy, it is desirable to prevent Brownian motion of the particle as much as possible. Brownian motion of the particle can be prevented to some extent, depending on a structure of a sample container that stores the sample 110. From the viewpoint of measurement accuracy, it is desirable to prevent an air bubble from being mixed in the sample 110. The air bubble can also be prevented from being mixed therein to some extent, depending on the structure of the sample container. Therefore, in the fifth embodiment and sixth and seventh embodiments of the present invention, a structure example of the sample container suitable for use in the first to fourth embodiments will be described.

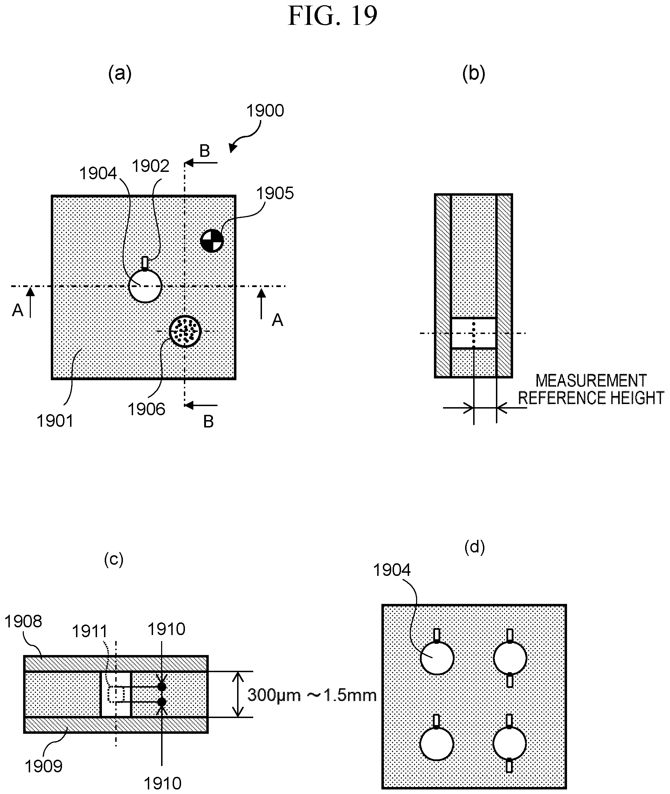

Fig. 19 is a block diagram of a sample container 1900 according to the fifth embodiment. Fig. 19(a) is a top view, Fig. 19(b) is a cross-sectional view taken along the line B-B, Fig. 19(c) is a cross-sectional view taken along the line A-A, and Fig. 19(d) is a top view of a modification. The sample container 1900 is a container for storing the sample 110. The sample container 1900 includes a base material 1901, an air bubble storage portion 1902, a storage hole 1904, a horizontal reference marker 1905, and a reference particle storage hole 1906.

The storage hole 1904 is a hole for storing the sample 110, and is formed so as to penetrate the base material 1901. A depth of the storage hole 1904 is, for example, about 300 $\mu$m to 1.5 mm. The air bubble storage portion 1902 is a gap portion protruding from a side surface of the storage hole 1904, and communicates with the storage hole 1904. Even though an air bubble is generated when the sample 110 is introduced into the storage hole 1904, the air bubble can be released to the air bubble storage portion 1902 (a gas discharge port). Accordingly, when measurement of the sample 110 in the storage hole 1904 is performed, the air bubble can be prevented from interfering with the measurement thereof.

In order to allow the air bubble to move smoothly from the storage hole 1904 to the air bubble storage portion 1902, an inner wall of the storage hole 1904 is desirably rounded. In Fig. 19, while one air bubble storage portion 1902 is disposed on the side wall of the storage hole 1904, two air bubble storage portions 1902 may be disposed thereon. For example, the air bubble storage portions 1902 may be disposed at positions facing each other in a state where the center of the storage hole 1904 is interposed therebetween. When too many air bubble storage portions 1902 are provided, it may be difficult for the air bubbles to move, such that one or two air bubble storage portions 1902 are desirably provided for each storage hole 1904.

When a hole diameter of the storage hole 1904 is 2.5 to 4 mm and a shape of the air bubble storage portion 1902 in the top view (Fig. 19) is rectangular, a width of the air bubble storage portion 1902 is set to about 0.5 mm and a length thereof is set to about 1.5 mm, thereby making it possible to confirm that the air bubble smoothly moves from the storage hole 1904 to the air bubble storage portion 1902.

As illustrated in Fig. 19(d), when a plurality of storage holes 1904 are disposed on the base material 1901, a position of the air bubble storage portion 1902 connected to each storage hole 1904 and the number thereof may not be the same. Fig. 19(d) illustrates an example in which the storage hole 1904 to which one air bubble storage portion 1902 is connected and the storage hole 1904 to which two air bubble storage portions 1902 are connected are provided.

The horizontal reference marker 1905 can be used as a reference when the sample container 1900 is installed horizontally. For example, water containing the air bubble may be contained in the horizontal reference marker 1905, and the sample container 1900 may be installed so that the center of the air bubble is positioned at the center of the horizontal reference marker 1905.

The reference particle storage hole 1906 stores a reference particle at an almost central portion in the depth direction. A position of the reference particle can be used as a reference for the focal point position of the measurement light in the Z axis direction. A procedure of sealing the reference particle will be described later.

An upper surface of the base material 1901 is sealed by a sealing substrate 1908, and a lower surface thereof is sealed by a transmissive substrate 1909. That is, an upper surface and a bottom surface of the storage hole 1904 are also sealed by these substrates. The measurement light is emitted to the sample 110 in the storage hole 1904 via the transmissive substrate 1909. A portion 1910 of a space in the storage hole 1904 that is close to the surface of each substrate is excluded from a measurement target by an influence of interface reflection from the substrate. Therefore, actually measured portion is a region 1911.

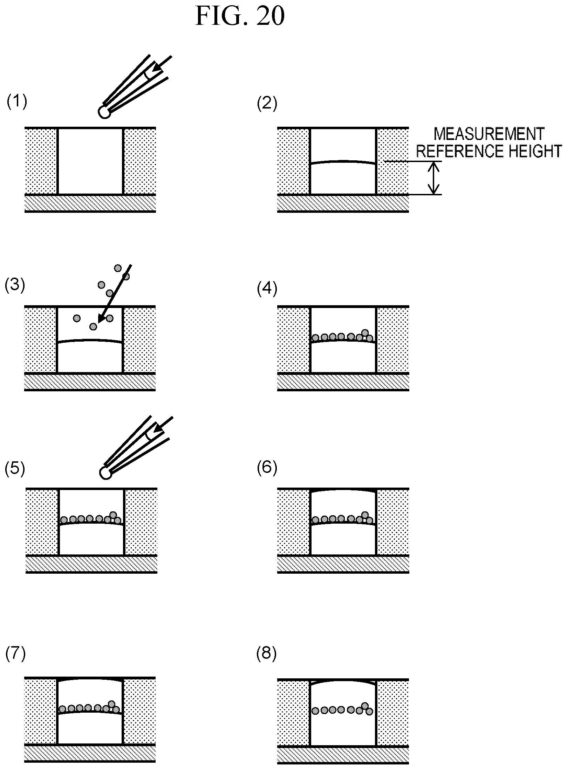

Fig. 20 is a diagram illustrating a procedure of forming the reference particle storage hole 1906. A sealing material (for example, UV curable resin) is injected into an empty hole (1). When the sealing material reaches a measurement reference height (for example, the center in the depth direction of the hole), the sealing material is cured by ultraviolet irradiation and heating depending on the properties of the sealing material (2). A reference particle (for example, polybeads having a diameter of 1 $\mu$m) is put onto the sealing material (3) and diffused evenly (4). By further injecting the sealing material (5), the reference particle is covered with the sealing material (6), and cured in the same manner (7). When the sealing material is cured, the reference particle storage hole 1906 in which the reference particle is disposed at the measurement reference height is completed (8).

<Fifth embodiment: Summary>

The sample container 1900 according to the fifth embodiment includes the air bubble storage portion 1902 connected to the storage hole 1904. As a result, even though the air bubble is generated when the sample 110 is introduced into the storage hole 1904, the air bubble can be released to the air bubble storage portion 1902. As a result, when the measurement of the storage hole 1904 is performed, the air bubble can be prevented from interfering with the measurement thereof, such that the measurement accuracy is improved.

<Sixth embodiment>

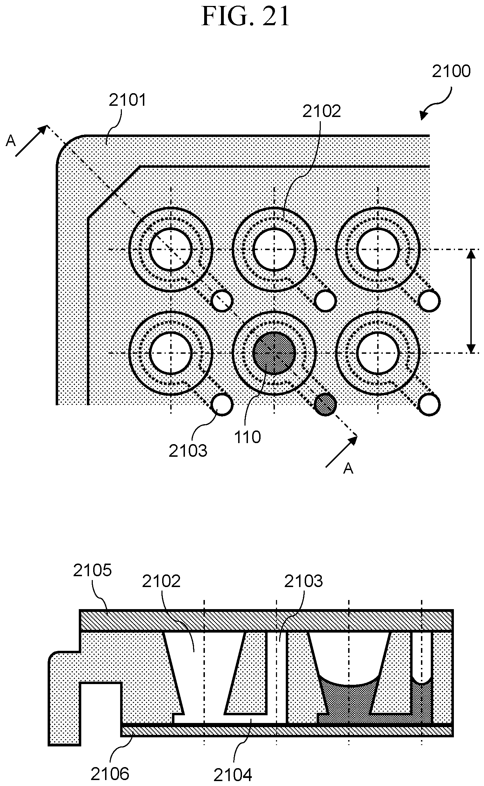

Fig. 21 is a block diagram of a sample container 2100 according to a sixth embodiment of the present invention. An upper part is a top view, and a lower part is a cross-sectional view taken along the line A-A. A plurality of wells 2102 are disposed on a plate 2101, and a space (a pitch) between the wells 2102 is determined by, for example, a product standard. The well 2102 is a storage hole for storing the sample 110. The well 2102 is formed in a tapered shape from an upper surface to a bottom surface.
An outflow port 2103 is formed near the well 2102. A bottom portion of the well 2102 and a bottom portion of the outflow port 2103 are connected by a flow path 2104. An upper surface of the well 2102 and an upper surface of the outflow port 2103 are formed on the same plane as an upper surface of the plate 2101. After the sample 110 is introduced into the well 2102, an air bubble can be released through the flow path 2104 and the outflow port 2103.
A bottom surface of the plate 2101 is sealed by a transmissive substrate 2106, which also seals the bottom portion of the well 2102. The measurement light is emitted to the sample 110 in the well 2102 through the transmissive substrate 2106. After the well 2102 stores the sample 110, the upper surface of the well 2102 is covered with a seal 2105 (for example, a sealing tape). Accordingly, the sample 110 is sealed in the well 2102.

<Sixth embodiment: Summary>

In the sample container 2100 according to the sixth embodiment, since an introduction port of the well 2102 is formed in the tapered shape, the sample 110 can be smoothly introduced thereinto. As a result, it is possible to prevent the air bubble from being generated when the sample 110 is introduced thereinto. Even though the air bubble is generated in the well 2102, the air bubble can be released through the flow path 2104 and the outflow port 2103. By the above-described structure, the particle size distribution can be calculated accurately even when the well 2102 of which pitch is specified is used.

<Seventh embodiment>

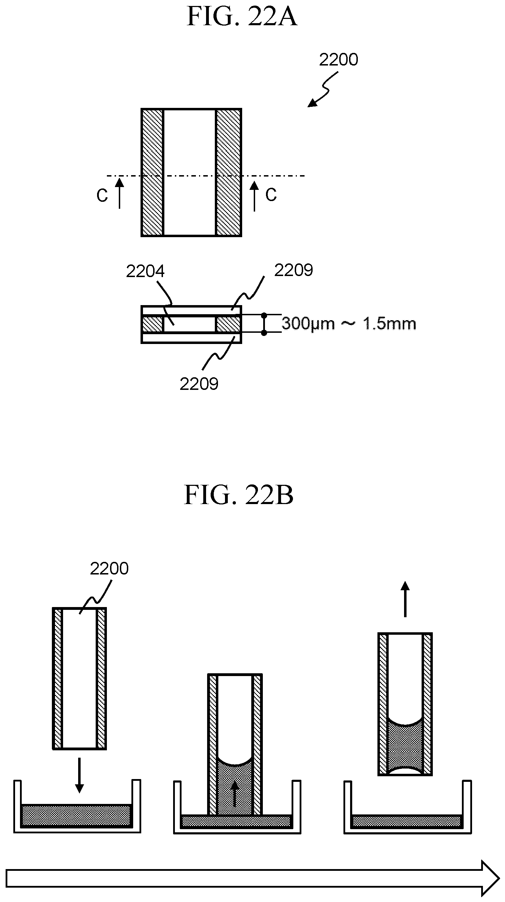

Fig. 22A is a diagram illustrating a configuration of a sample container 2200 according to a seventh embodiment of the present invention. An upper part of Fig. 22A is a side cross-sectional view, and a lower part of Fig. 22A is a cross-sectional view taken along the line C-C. The sample container 2200 has a structure in which a member in which a flow path 2204 is formed is interposed between transmissive substrates 2209. A depth of the flow path 2204 is, for example, about 300 $\mu$m to 1.5 mm in the same manner as that of the storage hole 1904 of the fifth embodiment.
Fig. 22B is a side cross-sectional view illustrating a procedure of introducing the sample 110 into the sample container 2200. The procedure proceeds from a left side to a right side in Fig. 22B. The sample 110 is stored in an appropriate member (for example, a beaker and a petri dish), and one end of the flow path 2104 contacts a liquid level. When a depth of the flow path 2104 is appropriate, the sample 110 is introduced into the flow path 2104 by capillary phenomenon. After introducing the sample 110 thereinto, the sample container 2200 is pulled up from the liquid level. Even though an air bubble is introduced into the flow path 2104, the air bubble can be released from an end portion on an opposite side of the flow path 2104 (a gas discharge port).

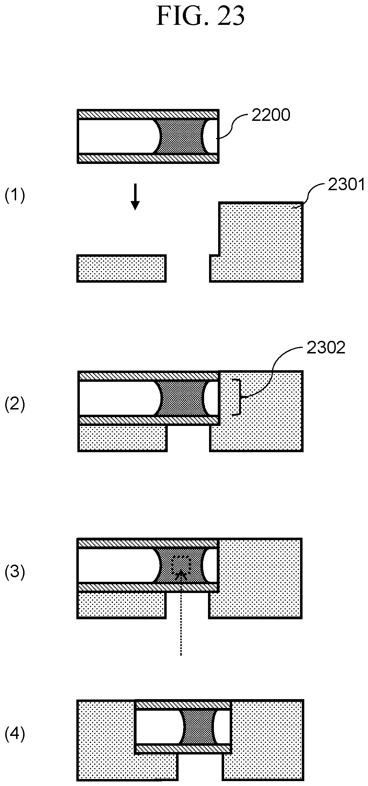

Fig. 23 is a side cross-sectional view illustrating a method of using the sample container 2200 according to the seventh embodiment. The sample container 2200 includes a frame member 2301. The frame member 2301 may be configured as a part of the sample container 2200, or may be configured as a member different from the sample container 2200. For example, a cassette member storing the sample container 2200 can be configured as the frame member 2301.

The frame member 2301 is a member to which the sample container 2200 is attached. After introducing the sample 110 into the sample container 2200, the sample container 2200 is attached to the frame member 2301. The frame member 2301 includes a wall portion 2302 that covers one end of the flow path 2204. The wall portion 2302 may cover either one end of the flow path 2204 or both ends thereof depending on how the sample container 2200 is handled. Fig. 23(4) is an example of covering both ends thereof. The wall portion 2302 can prevent the sample 110 stored in the sample container 1900 from drying out.

<Regarding modification of the present invention>

The present invention is not limited to the above-described embodiments, and includes various modifications. For example, the embodiments are described in detail in order to describe the present invention in an easy-to-understand manner, and are not necessarily limited to the one including all the described configurations. It is possible to replace a part of the configuration of one embodiment with a configuration of another embodiment, and it is also possible to add the configuration of another embodiment to the configuration of one embodiment. It is possible to add, delete, and replace another configuration with respect to a part of the configuration of each embodiment.

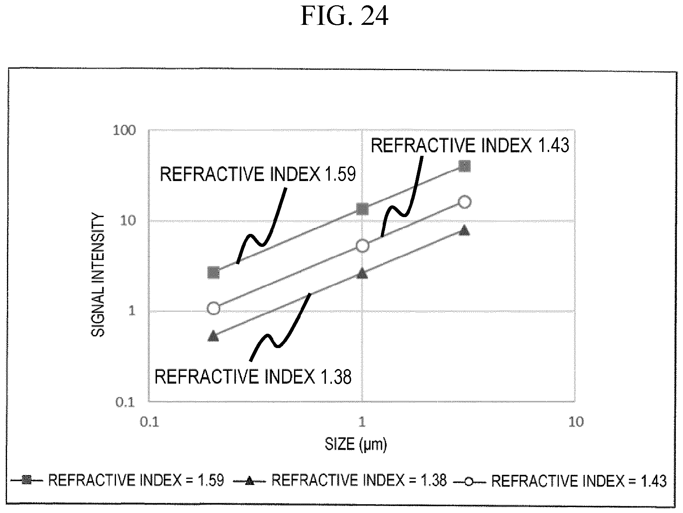

Fig. 24 is an example of correspondence relationship data describing a correspondence relationship between the reflected light intensity and the particle size. This correspondence relationship may vary depending on a photorefractive index of a sample solution. Here, as illustrated in Fig. 24, the correspondence relationship can be described for each refractive index of the sample solution. A user specifies the refractive index of the sample solution with respect to the size distribution measurement device 100, and the signal processing unit 124 acquires the particle size from the correspondence relationship corresponding to the refractive index. The refractive index of the sample solution is generally different depending on a sample type, and when the refractive indexes of the same type of sample are different, the correspondence relationship may be described for each refractive index.

As the XY axis drive mechanism 107 in the first embodiment, for example, an acousto-optic deflector (AOD), a polygon mirror, a co-vibration type galvanometer mirror (a MEMS mirror), or the like can be used. The same configuration can be used for the XY axis drive in the second and third embodiments. As the Z axis drive mechanism 109 in the first embodiment, for example, a mechanism for driving a stage on which the sample 110 is placed can be used.

As the variable focus lens 126 in the second embodiment, for example, an ultrasonic varifocal lens, a liquid crystal variable focus mirror, a deformable mirror, or the like can be used. The same configuration can be used even when the XYZ axis drive mechanism 127 in the third embodiment scans the focal point in the Z axis direction.

The signal processing unit 124 can be configured by using hardware such as a circuit device or the like on which the function is loaded, and can also be configured by allowing a calculation device (Central Processing Unit: CPU or the like) to execute software on which the function is loaded.

Reference Signs List

    100: size distribution measurement device
    110: sample
    112: interference optical system
    124: signal processing unit
    1900: sample container
    2100: sample container
    2200: sample container
    2300: sample container
    2301: frame member
    2302: wall portion

**Claims**

1.    A size distribution measurement device for measuring a size distribution of particles in a liquid sample (110) containing the particles, the device comprising:

        a light source (101) adapted to emit light;
        a scanning unit (109) adapted to scan a focal point position of the light along an optical axis direction of the light and in a plane orthogonal to the optical axis direction for each focal point position of the light along the optical axis direction so that the light is reflected from respectively different positions in the optical axis direction of the particle in a state where the particle moves in the optical axis direction in the sample;

a detector (117, 121) adapted to detect intensities of the light reflected from the sample; and

a signal processing unit (124) adapted to acquire an observation image of the sample in the plane orthogonal to the optical axis direction for each focal point position of the light scanned by the scanning unit along the optical axis direction and to calculate a size of each individual particle by using a maximum light intensity of the intensities of the light along the optical axis direction for each focal point position of the light,

wherein

the scanning unit is adapted to scan the focal point position at a frame rate of $(\gamma \times D) / (\Delta z \times \Delta d)$ or more so that the scanning speed is fast enough to follow Brownian motion speed of the particle, where a scanning interval of the light in the optical axis direction is defined as $\Delta d$, a resolution of the size distribution measurement device in the optical axis direction is defined as $\Delta z$, a diffusion coefficient of the particles is defined as $D$, the number of scans per second of the focal point position of the light in the optical axis direction is defined as a frame rate and $\gamma$ is a constant;

**characterized in that**

the signal processing unit is further adapted to perform a switching step of switching between a method of calculating the sizes of the particles by using the maximum light intensity and a method of calculating the sizes of the particles by using the acquired observation image,

when a value obtained by dividing the size of one of the particles as calculated by using the maximum light intensity by a spot diameter of the light is equal to or greater than a first switching threshold value, the signal processing unit is adapted to calculate the size of the particle again by using the observation image, and

when the size of the particle calculated by using the observation image is equal to or less than a second switching threshold value, the signal processing unit is adapted to calculate the size of the particle again by using the maximum light intensity.

2. The size distribution measurement device according to claim 1,
wherein the signal processing unit (124) is further adapted to specify the number of the particles on the plane by determining whether or not any one of the particles exists in a coordinate region within a predetermined range on the plane according to the intensity of the light.

3. The size distribution measurement device according to claim 2,

wherein the signal processing unit (124) is further adapted to determine that the particle exists in the coordinate region when the intensities corresponding to two or more adjacent focal point positions along the optical axis direction are equal to or greater than a determination threshold value, and

when determining that the particle exists in the coordinate region, the signal processing unit is adapted to calculate the size of the particle by using the maximum light intensity between one of the focal point positions at which the intensity first reaches the determination threshold value or higher, said one focal point position being adjacent to one or more focal point positions at which the intensity is equal to or greater than the determination threshold value, and another one of the focal point positions at which the intensity becomes less than the determination threshold value, said another focal point position being adjacent to one or more focal point positions at which the intensity is smaller than the determination threshold value.

4. The size distribution measurement device according to claim 1,
wherein the signal processing unit (124) is adapted to calculate the sizes of the particles by using correspondence relationship data that describes a correspondence relationship between the intensity of the light reflected from the sample and the size of the particle for each type of sample, and by referring to the correspondence relationship data by using the type of the sample and the intensity of the light reflected from the sample.

5. The size distribution measurement device according to claim 1, further comprising:

an optical branching portion (113) adapted to branch the light emitted by the light source (101) and to generate measurement light and reference light, and

an interference optical system (112) adapted to generate three or more interference lights having phase relationships different from each other by multiplexing signal light generated by the reflection of the measurement light from the sample with the reference light,

wherein the detector (117, 121) is adapted to detect the three or more interference lights and to output the detected interference lights as electric signals (122, 123).

6. The size distribution measurement device according to claim 1,
wherein the signal processing unit (124) is adapted to output data describing the distribution of numbers of particles with respect to the size of the particles.

7. A size distribution measurement method that measures a size distribution of particles in a liquid sample containing the particles, the method comprising:

a step of irradiating the sample with light emitted from a light source (101);
a scanning step of scanning a focal point position of the light along an optical axis direction of the light and in a plane orthogonal to the optical axis direction for each focal point position of the light along the optical axis direction,
wherein in the scanning step, when a scanning interval of the light in the optical axis direction is defined as $\Delta d$, a resolution of the size distribution measurement method in the optical axis direction is defined as $\Delta z$, a diffusion coefficient of the particles is defined as D, and the number of scans per second of the focal point position of the light in the optical axis direction is defined as a frame rate, the focal point position is scanned at a frame rate of $(\gamma \times D) / (\Delta z \times \Delta d)$ or more where $\gamma$ is a constant, so that the scanning speed is fast enough to follow Brownian motion speed of the particle;
a step of detecting intensities of the light reflected from the sample;
an image acquisition step of acquiring an observation image of the sample in the plane orthogonal to the optical axis direction for each focal point position of the light scanned along the optical axis direction; and
a calculation step of calculating a size of each individual particle by using a maximum light intensity of the intensities of the light along the optical axis direction for each focal point position of the light,
**characterized in that**
the calculation step includes a switching step of switching between a method of calculating the sizes of the particles by using the maximum light intensity and a method of calculating the sizes of the particles by using the acquired observation image, and
wherein, when a value obtained by dividing the size of one of the particles as calculated by using the maximum light intensity by a spot diameter of the light is equal to or greater than a first switching threshold value, the size of the particle is calculated again by using the observation image, and when the size of the particle calculated by using the observation image is equal to or less than a second switching threshold value, the size of the particle is calculated again by using the maximum light intensity.

**Patentansprüche**

1. Größenverteilungs-Messvorrichtung zum Messen einer Größenverteilung von Teilchen in einer flüssigen Probe (110), die die Teilchen enthält, wobei die Vorrichtung umfasst:

eine Lichtquelle (101), die dazu ausgelegt ist, Licht auszusenden;
eine Scaneinheit (109), die dazu ausgelegt ist, eine Brennpunktposition des Lichts entlang einer optischen Achsenrichtung des Lichts und in einer Ebene orthogonal zur optischen Achsenrichtung für jede Brennpunktposition des Lichts entlang der optischen Achsenrichtung zu scannen, so dass das Licht von jeweils unterschiedlichen Positionen des Teilchens in der optischen Achsenrichtung in einem Zustand reflektiert wird, in dem sich das Teilchen in der optischen Achsenrichtung in der Probe bewegt;
einen Detektor (117, 121), der dazu ausgelegt ist, die Intensitäten des von der Probe reflektierten Lichts zu detektieren; und
eine Signalverarbeitungseinheit (124), die dazu ausgelegt ist, ein Beobachtungsbild der Probe in der Ebene orthogonal zur optischen Achsenrichtung für jede Brennpunktposition des von der Scaneinheit entlang der optischen Achsenrichtung gescannten Lichts zu erfassen und eine Größe jedes einzelnen Teilchens unter Verwendung einer maximalen Lichtintensität der Intensitäten des Lichts entlang der optischen Achsenrichtung für jede Brennpunktposition des Lichts zu berechnen,
wobei
die Scaneinheit dazu ausgelegt ist, die Brennpunktposition mit einer Frame-Rate von $(\gamma \times D) / (\Delta z \times \Delta d)$ oder mehr zu scannen, so dass die Scangeschwindigkeit schnell genug ist, um der Brownschen Bewegungsgeschwindigkeit des Teilchens zu folgen, wobei ein Scanintervall des Lichts in der optischen Achsenrichtung als $\Delta d$ definiert ist, eine Auflösung der Größenverteilungs-Messvorrichtung in der optischen Achsenrichtung als $\Delta z$ definiert ist, ein Diffusionskoeffizient der Teilchen als D definiert ist, die Anzahl der Scans pro Sekunde der Brennpunktposition des Lichts in der optischen Achsenrichtung als eine Frame-Rate definiert ist und $\gamma$ eine

Konstante ist;

**gekennzeichnet dadurch, dass**

die Signalverarbeitungseinheit ferner dazu ausgelegt ist, einen Umschaltschritt auszuführen, bei dem zwischen einem Verfahren zur Berechnung der Größen der Teilchen unter Verwendung der maximalen Lichtintensität und einem Verfahren zur Berechnung der Größen der Teilchen unter Verwendung des erfassten Beobachtungsbildes umgeschaltet wird,

wenn ein Wert, der durch Division der Größe eines der Teilchen, berechnet unter Verwendung der maximalen Lichtintensität, durch einen Lichtfleckdurchmesser erhalten wird, größer als oder gleich einem ersten Umschaltschwellenwert ist, die Signalverarbeitungseinheit dazu ausgelegt ist, die Größe des Teilchens unter Verwendung des Beobachtungsbildes erneut zu berechnen, und

wenn die unter Verwendung des Beobachtungsbildes berechnete Größe des Teilchens kleiner als oder gleich einem zweiten Umschaltschwellenwert ist, die Signalverarbeitungseinheit dazu ausgelegt ist, die Größe des Teilchens unter Verwendung der maximalen Lichtintensität erneut zu berechnen.

2. Größenverteilungs-Messvorrichtung nach Anspruch 1,

wobei die Signalverarbeitungseinheit (124) ferner dazu ausgelegt ist, die Anzahl der Teilchen auf der Ebene zu spezifizieren, indem sie gemäß der Intensität des Lichts bestimmt, ob irgendeines der Teilchen in einem Koordinatenbereich innerhalb eines vorgegebenen Bereichs auf der Ebene existiert oder nicht.

3. Größenverteilungs-Messvorrichtung nach Anspruch 2,

wobei die Signalverarbeitungseinheit (124) ferner dazu ausgelegt ist, zu bestimmen, dass das Teilchen in dem Koordinatenbereich existiert, wenn die Intensitäten, die zwei oder mehr benachbarten Brennpunktpositionen entlang der optischen Achsenrichtung entsprechen, größer als oder gleich einem Bestimmungsschwellenwert sind, und

wenn bestimmt wird, dass das Teilchen in dem Koordinatenbereich existiert, die Signalverarbeitungseinheit dazu ausgelegt ist, die Größe des Teilchens zu berechnen, indem die maximale Lichtintensität zwischen einer der Brennpunktpositionen, bei der die Intensität zuerst den Bestimmungsschwellenwert oder einen höheren Wert erreicht, wobei die eine Brennpunktposition an eine oder mehrere Brennpunktpositionen angrenzt, bei denen die Intensität größer als oder gleich dem Bestimmungsschwellenwert ist, und einer anderen der Brennpunktpositionen, bei der die Intensität kleiner als der Bestimmungsschwellenwert wird, wobei die andere Brennpunktposition an eine oder mehrere Brennpunktpositionen angrenzt, bei denen die Intensität kleiner als der Bestimmungsschwellenwert ist, verwendet wird.

4. Größenverteilungs-Messvorrichtung nach Anspruch 1,

wobei die Signalverarbeitungseinheit (124) dazu ausgelegt ist, die Größe der Teilchen unter Verwendung von Korrespondenzbeziehungsdaten, die eine Korrespondenzbeziehung zwischen der Intensität des von der Probe reflektierten Lichts und der Größe des Teilchens für jeden Probentyp beschreiben, und unter Bezugnahme auf die Korrespondenzbeziehungsdaten unter Verwendung des Probentyps und der Intensität des von der Probe reflektierten Lichts zu berechnen.

5. Größenverteilungs-Messvorrichtung nach Anspruch 1 ferner umfassend:

einen optischen Verzweigungsabschnitt (113), der dazu ausgelegt ist, das von der Lichtquelle (101) ausgesendete Licht zu verzweigen und Messlicht und Referenzlicht zu erzeugen, und

ein optisches Interferenzsystem (112), das dazu ausgelegt ist, drei oder mehr Interferenzlichtkomponenten mit voneinander verschiedenen Phasenbeziehungen durch Multiplexen von Signallicht, das durch die Reflexion des Messlichts von der Probe erzeugt wird, mit dem Referenzlicht zu erzeugen,

wobei der Detektor (117, 121) dazu ausgelegt ist, die drei oder mehr Interferenzlichtkomponenten zu detektieren und die detektierten Interferenzlichtkomponenten als elektrische Signale (122, 123) auszugeben.

6. Größenverteilungs-Messvorrichtung nach Anspruch 1,

wobei die Signalverarbeitungseinheit (124) dazu ausgelegt ist, Daten auszugeben, die die Verteilung der Anzahlen der Teilchen in Bezug auf die Größe der Teilchen beschreiben.

7. Größenverteilungs-Messverfahren, das eine Größenverteilung von Teilchen in einer flüssigen Probe, die die Teilchen enthält, misst, wobei das Verfahren umfasst:

einen Schritt der Bestrahlung der Probe mit von einer Lichtquelle (101) ausgesendetem Licht;

einen Scanschritt des Scannens einer Brennpunktposition des Lichts entlang einer optischen Achsenrichtung des Lichts und in einer Ebene orthogonal zur optischen Achsenrichtung für jede Brennpunktposition des Lichts entlang der optischen Achsenrichtung, wobei im Scanschritt, wenn ein Scanintervall des Lichts in der optischen Achsenrichtung als $\Delta$d definiert ist, eine Auflösung des Größenverteilungs-Messverfahrens in optischen Achsenrichtung als $\Delta$z definiert ist, ein Diffusionskoeffizient der Teilchen als D definiert ist, und die Anzahl der Scans pro Sekunde der Brennpunktposition des Lichts in optischen Achsenrichtung als Frame-Rate definiert ist, die Brennpunktposition mit einer Frame-Rate von $(\gamma \times D) / (\Delta z \times \Delta d)$ oder mehr gescannt wird, wobei $\gamma$ eine Konstante ist, so dass die Scangeschwindigkeit schnell genug ist, um der Brownschen Bewegungsgeschwindigkeit des Teilchens zu folgen;

einen Schritt zum Detektieren der Intensitäten des von der Probe reflektierten Lichts;

einen Bilderfassungsschritt zum Erfassen eines Beobachtungsbildes der Probe in der Ebene orthogonal zur optischen Achsenrichtung für jede Brennpunktposition des entlang der optischen Achsenrichtung gescannten Lichts; und

einen Berechnungsschritt zum Berechnen einer Größe jedes einzelnen Teilchens unter Verwendung einer maximalen Lichtintensität der Intensitäten des Lichts entlang der optischen Achsenrichtung für jede Brennpunktposition des Lichts,

**gekennzeichnet dadurch, dass**

der Berechnungsschritt einen Umschaltschritt des Umschaltens zwischen einem Verfahren zum Berechnen der Größen der Teilchen unter Verwendung der maximalen Lichtintensität und einem Verfahren zum Berechnen der Größen der Teilchen unter Verwendung des erfassten Beobachtungsbildes beinhaltet, und

wobei, wenn ein Wert, der erhalten wird, indem die Größe eines der Teilchen, die unter Verwendung der maximalen Lichtintensität berechnet wird, durch einen Lichtfleckdurchmesser dividiert wird, größer als oder gleich einem ersten Umschaltschwellenwert ist, die Größe des Teilchens unter Verwendung des Beobachtungsbildes erneut berechnet wird, und wenn die Größe des Teilchens, die unter Verwendung des Beobachtungsbildes berechnet wird, kleiner als oder gleich einem zweiten Umschaltschwellenwert ist, die Größe des Teilchens unter Verwendung der maximalen Lichtintensität erneut berechnet wird.

## Revendications

1. Dispositif de mesure de distribution de tailles pour mesurer une distribution de tailles de particules dans un échantillon liquide (110) contenant les particules, le dispositif comprenant :

   une source (101) de lumière adaptée à émettre une lumière ;

   une unité (109) de balayage adaptée à balayer une position de point focal de la lumière le long d'un sens d'axe optique de la lumière et dans un plan orthogonal au sens d'axe optique pour chaque position de point focal de la lumière le long du sens d'axe optique de telle sorte que la lumière est réfléchie depuis des positions respectivement différentes dans le sens d'axe optique de la particule dans un état où la particule se déplace dans le sens d'axe optique dans l'échantillon ;

   un détecteur (117, 121) adapté à détecter des intensités de la lumière réfléchie depuis l'échantillon ; et

   une unité (124) de traitement de signaux adaptée à acquérir une image d'observation de l'échantillon dans le plan orthogonal au sens d'axe optique pour chaque position de point focal de la lumière balayée par l'unité de balayage le long du sens d'axe optique et à calculer une taille de chaque particule individuelle en utilisant une intensité maximum de lumière parmi les intensités de la lumière le long du sens d'axe optique pour chaque position de point focal de la lumière,

   dans lequel

   l'unité de balayage est adaptée à balayer la position de point focal à une fréquence de trames de $(\gamma \times D) / (\Delta z \times \Delta d)$ ou plus de telle sorte que la vitesse de balayage est suffisamment rapide pour suivre une vitesse de mouvement brownien de la particule, où un intervalle de balayage de la lumière dans le sens d'axe optique est défini comme $\Delta$d, une résolution du dispositif de mesure de distribution de tailles dans le sens d'axe optique est définie comme $\Delta$z, un coefficient de diffusion des particules est défini comme D, le nombre de balayages par seconde de la position de point focal de la lumière dans le sens d'axe optique est défini comme une fréquence de trames et $\gamma$ est une constante ;

   **caractérisé en ce que**

   l'unité de traitement de signaux est en outre adaptée à exécuter une étape de commutation pour commuter entre un procédé de calcul des tailles des particules en utilisant l'intensité maximum de lumière et un procédé de calcul des tailles des particules en utilisant l'image d'observation acquise,

lorsqu'une valeur obtenue en divisant la taille d'une des particules telle que calculée en utilisant l'intensité maximum de lumière par un diamètre de spot de la lumière est égale ou supérieure à une première valeur de seuil de commutation, l'unité de traitement de signaux est adapté à calculer la taille de la particule de nouveau en utilisant l'image d'observation, et

lorsque la taille de la particule calculée en utilisant l'image d'observation est égale ou inférieure à une deuxième valeur de seuil de commutation, l'unité de traitement de signaux est adapté à calculer la taille de la particule de nouveau en utilisant l'intensité maximum de lumière.

**2.** Dispositif de mesure de distribution de tailles selon la revendication 1,
dans lequel l'unité (124) de traitement de signaux est en outre adaptée à spécifier le nombre des particules sur le plan en déterminant si l'une quelconque des particules existe ou non dans une région de coordonnées à l'intérieur d'une plage prédéterminée sur le plan en fonction de l'intensité de la lumière.

**3.** Dispositif de mesure de distribution de tailles selon la revendication 2,

dans lequel l'unité (124) de traitement de signaux est en outre adaptée à déterminer que la particule existe dans la région de coordonnées lorsque les intensités correspondant à deux positions de point focal adjacentes ou plus le long du sens d'axe optique sont égales ou supérieures à une valeur de seuil de détermination, et
lors de la détermination que la particule existe dans la région de coordonnées, l'unité de traitement de signaux est adaptée à calculer la taille de la particule en utilisant l'intensité maximum de lumière entre une des positions de point focal à laquelle l'intensité atteint en premier la valeur de seuil de détermination ou supérieure, ladite une position de point focal étant adjacente à une ou plusieurs positions de point focal auxquelles l'intensité est égale ou supérieure à la valeur de seuil de détermination, et une autre des positions de point focal à laquelle l'intensité devient inférieure à la valeur de seuil de détermination, ladite autre position de point focal étant adjacente à une ou plusieurs positions de point focal auxquelles l'intensité est plus petite que la valeur de seuil de détermination.

**4.** Dispositif de mesure de distribution de tailles selon la revendication 1,
dans lequel l'unité (124) de traitement de signaux est adaptée à calculer les tailles des particules en utilisant des données de relation de correspondance qui décrivent une relation de correspondance entre l'intensité de la lumière réfléchie depuis l'échantillon et la taille de la particule pour chaque type d'échantillon, et en se référant aux données de relation de correspondance en utilisant le type de l'échantillon et l'intensité de la lumière réfléchie depuis l'échantillon.

**5.** Dispositif de mesure de distribution de tailles selon la revendication 1, comprenant en outre :

une partie (113) de ramification optique adaptée à ramifier la lumière émise par la source (101) de lumière et à générer une lumière de mesure et une lumière de référence, et
un système optique (112) d'interférence adapté à générer trois lumières d'interférence ou plus ayant des relations de phase différentes les unes des autres en multiplexant une lumière signal générée par la réflexion de la lumière de mesure depuis l'échantillon avec la lumière de référence,
dans lequel le détecteur (117, 121) est adapté à détecter les trois lumières d'interférence ou plus et à délivrer en sortie les lumières d'interférence détectées comme des signaux électriques (122, 123).

**6.** Dispositif de mesure de distribution de tailles selon la revendication 1,
dans lequel l'unité (124) de traitement de signaux est adaptée à délivrer en sortie des données décrivant la distribution de nombres de particules par rapport à la taille des particules.

**7.** Procédé de mesure de distribution de tailles qui mesure une distribution de tailles de particules dans un échantillon liquide contenant les particules, le procédé comprenant :

une étape d'éclairage de l'échantillon avec une lumière émise depuis une source (101) de lumière ;
une étape de balayage pour balayer une position de point focal de la lumière le long d'un sens d'axe optique de la lumière et dans un plan orthogonal au sens d'axe optique pour chaque position de point focal de la lumière le long du sens d'axe optique,
dans lequel, à l'étape de balayage, lorsqu'un intervalle de balayage de la lumière dans le sens d'axe optique est défini comme $\Delta d$, une résolution du dispositif de mesure de distribution de tailles dans le sens d'axe optique est définie comme $\Delta z$, un coefficient de diffusion des particules est défini comme D, et le nombre de balayages par seconde de la position de point focal de la lumière dans le sens d'axe optique est défini comme une fréquence de trames, la position de point focal est balayée à une fréquence de trames de $(\gamma \times D) / (\Delta z \times \Delta d)$ ou plus où $\gamma$ est une

constante, de telle sorte que la vitesse de balayage est suffisamment rapide pour suivre une vitesse de mouvement brownien de la particule ;

une étape de détection d'intensités de la lumière réfléchie depuis l'échantillon ;

une étape d'acquisition d'image pour acquérir une image d'observation de l'échantillon dans le plan orthogonal au sens d'axe optique pour chaque position de point focal de la lumière balayée le long du sens d'axe optique ; et

une étape de calcul pour calculer une taille de chaque particule individuelle en utilisant une intensité maximum de lumière parmi les intensités de la lumière le long du sens d'axe optique pour chaque position de point focal de la lumière,

**caractérisé en ce que**

l'étape de calcul inclut une étape de commutation pour commuter entre un procédé de calcul des tailles des particules en utilisant l'intensité maximum de lumière et un procédé de calcul des tailles des particules en utilisant l'image d'observation acquise, et

dans lequel, lorsqu'une valeur obtenue en divisant la taille d'une des particules telle que calculée en utilisant l'intensité maximum de lumière par un diamètre de spot de la lumière est égale ou supérieure à une première valeur de seuil de commutation, la taille de la particule est de nouveau calculée en utilisant l'image d'observation, et lorsque la taille de la particule calculée en utilisant l'image d'observation est égale ou inférieure à une deuxième valeur de seuil de commutation, la taille de la particule est de nouveau calculée en utilisant l'intensité maximum de lumière.

# FIG. 1

(a) FOCAL POINT POSITION
MATCHES PARTICLE

(b) FOCAL POINT POSITION AND
PARTICLE DO NOT MATCH

PARTICLE

PARTICLE

FOCAL
POINT

LENS

(c) FOCAL POINT DEVIATION
AND DETECTION SIGNAL

LARGE PARTICLE

SMALL PARTICLE

STANDARDIZED
DETECTION SIGNAL

FOCAL
POINT

AMOUNT OF FOCAL
POINT DEVIATION

FIG. 2

# FIG. 3

# FIG. 4

# FIG. 5

## FIG. 6

## FIG. 7

# FIG. 8

# FIG. 9

## step1

Image #1

#100

z scan
(pitch:0.5μm)

particle

x-y image
(300x300μm)

## step2

SIGNAL INTENSITY

max    PARTICLE 1

max    PARTICLE 2

z scan
(pitch:0.5μm)

#1 #2 #3····

xy IMAGE (NUMBER OF IMAGES =
MOVEMENT AMOUNT IN z DIRECTION)

## step3

NUMBER OF PARTICLES

PARTICLE 2      PARTICLE 1

PARTICLE SIZE

EP 3 910 315 B1

# FIG. 10

START

↓

S1001 | INPUT MEASUREMENT CONDITIONS (RANGE OF PARTICLE SIZE, RANGE OF NUMBER OF PARTICLES, AND MAXIMUM MEASUREMENT TIME)

↓

S1002 | ACQUIRE XY IMAGE WITH FOCAL POINT POSITION z = 0 Image(x,y,0)

↓

S1003 | ACQUIRE N SHEETS OF XY IMAGES WHILE MOVING SCANNING SURFACE IN Z DIRECTION Image(x,y,z)

↓

S1004 | gain CORRECTION AND NOISE PROCESSING

↓

S1005 | CHANGE OF REFLECTED LIGHT INTENSITY IS CALCULATED FOR EACH PARTICLE

↓

S1006 | DISPLAY PREDICTED REMAINING TIME

↓

S1007 | MAXIMUM LUMINANCE = SPECIFY PARTICLE SIZE FROM CORRESPONDENCE RELATIONSHIP DATA

↓

S1008 | END CONDITIONS (NUMBER OF PARTICLES AND TIME) — No

↓ Yes

S1009 | DISPLAY PARTICLE SIZE DISTRIBUTION ON DISPLAY UNIT

↓

AUTOMATIC TERMINATION

27

# FIG. 11

START

S1101 — SIMPLE MEASUREMENT FOR DETERMINING MEASUREMENT CONDITIONS

S1001 — INPUT MEASUREMENT CONDITIONS (RANGE OF PARTICLE SIZE, RANGE OF NUMBER OF PARTICLES, AND MAXIMUM MEASUREMENT TIME)

S1002 — ACQUIRE XY IMAGE WITH FOCAL POINT POSITION z = 0 Image(x,y,0)

S1003 — ACQUIRE N SHEETS OF XY IMAGES WHILE MOVING SCANNING SURFACE IN Z DIRECTION Image(x,y,z)

S1004 — gain CORRECTION AND NOISE PROCESSING

S1005 — CHANGE OF REFLECTED LIGHT INTENSITY IS CALCULATED FOR EACH PARTICLE

S1006 — DISPLAY PREDICTED REMAINING TIME

S1007 — MAXIMUM LUMINANCE = SPECIFY PARTICLE SIZE FROM CORRESPONDENCE RELATIONSHIP DATA

S1008 — END CONDITIONS (NUMBER OF PARTICLES AND TIME)  No

Yes

S1009 — DISPLAY PARTICLE SIZE DISTRIBUTION ON DISPLAY UNIT

AUTOMATIC TERMINATION

# FIG. 12

## FIG. 13

MIXTURE OF TWO TYPES

MIXTURE OF THREE TYPES

FIG. 14

MIXTURE OF TWO TYPES

MIXTURE OF THREE TYPES

EP 3 910 315 B1

# FIG. 15

# FIG. 16

# FIG. 17

# FIG. 18

# FIG. 19

(a)

(b)

1900

1904 1902 1905

B

A A

1901 1906 B

MEASUREMENT
REFERENCE HEIGHT

(c)

1908 1911 1910

300µm ~1.5mm

1909

1910

(d)

1904

# FIG. 20

(1)

(2)

MEASUREMENT
REFERENCE HEIGHT

(3)

(4)

(5)

(6)

(7)

(8)

# FIG. 21

FIG. 22A

FIG. 22B

# FIG. 23

(1)

2200

2301

(2)

2302

(3)

(4)

FIG. 24

**EP 3 910 315 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015083922 A
- JP 2017102032 A
- US 2017160185 A1
- JP 2018179971 A